(19) Europäisches Patentamt

European Patent Office

Office européen des brevets

(11) EP 0 768 587 B1

(12) **EUROPÄISCHE PATENTSCHRIFT**

(45) Veröffentlichungstag und Bekanntmachung des Hinweises auf die Patenterteilung:
**29.12.1997 Patentblatt 1997/52**

(51) Int Cl.$^6$: **G05B 19/416**

(21) Anmeldenummer: **95115952.4**

(22) Anmeldetag: **10.10.1995**

(54) **Taktsynchrone Bewegungsführung in zeitdiskreten Abtastsystemen**

Clock-synchronised motion control in discrete-time sampling systems

Commande de déplacement à synchronisation par implusions d'horloge dans des systèmes dans des systèmes échantillonnés temporels discrets

(84) Benannte Vertragsstaaten:
**AT CH DE ES FR GB IT LI SE**

(43) Veröffentlichungstag der Anmeldung:
**16.04.1997 Patentblatt 1997/16**

(73) Patentinhaber: **SIEMENS AKTIENGESELLSCHAFT**
**80333 München (DE)**

(72) Erfinder: **Papiernik, Wolfgang, Dr. Ing.**
**D-91054 Erlangen (DE)**

(56) Entgegenhaltungen:
**EP-A- 0 378 708 EP-A- 0 419 706**
**WO-A-90/10930 WO-A-95/10076**
**US-A- 5 379 367**

**Beschreibung**

Die Erfindung betrifft ein Verfahren sowie eine dazugehörige Vorrichtung zur taktsynchronen Bewegungsführung in zeitdiskreten Abtastsystemen, insbesondere zur Anwendung bei numerischen Steuerungen für Werkzeugmaschinen und Roboter.

In zeitdiskreten Abtastsystemen, beispielsweise bei numerisch gesteuerten Werkzeugmaschinen und Robotern, läßt sich eine Stellgröße zur Bewegungsführung in der Regel nur im festen Zeitraster der Steuerung, bei numerischen Steuerungen für Werkzeugmaschinen und Roboter im Interpolationstakt, ändern. Jedoch ist bisher keine exakte Lösung zu einer zeitoptimalen und taktsynchronen Bewegungsführung solcher zeitdisksreten Abtastsysteme bekannt. Aus diesem Grunde existieren zur Zeit alternative Ansätze, welche dieses Problem auf unterschiedliche Art und Weise lösen.

In der DE 41 07 514 A1 wird der Aufbau von zeitdiskreten Regelschleifen beschrieben, mit deren Hilfe das Ziel geregelt angefahren wird. Ein solches Verfahren ist jedoch nur dann befriedigend praktizierbar, wenn das Zeitraster klein gegenüber dem Einschwingverhalten der Regelung ist - sogenanntes quasi kontinuierliches Verhalten - und wird bis heute in der Regel bei Aufzügen, Förderkörben und Bahnen mit Erfolg eingesetzt. Im Einsatzgebiet der numerisch gesteuerten Werkzeugmaschinen liegt allerdings der Fall vor, daß die Ruck- und Beschleunigungsphasen in der Größenordnung des Interpolationstaktes, also des Zeitrasters, liegen, so daß kein quasi kontinuierliches Verhalten vorliegt und das Verfahren für einen solchen Anwendungsfall ausscheidet. Es ist somit nicht allgemein gültig anwendbar.

In der Dissertation "Bahnplanung und Bahnführung von Industrierobotern", J. Olomski, Braunschweig, Wiesbaden: Vieweg 1989, Fortschritte der Robotik Band 4, S. 42 bis 53 ist die Berechnung des optimalen Stellgrößenverlaufs für ein zeitkontinuierliches System und eine Approximation der kontinuierlichen Zeitpunkte durch das diskrete Zeitraster dargestellt. Da hier der Stellgrößenverlauf unabhängig vom Interpolationstaktraster festgelegt wird, treten Sprünge im Beschleunigungsprofil auf, welche bei einer Steuerung mit Momentenvorsteuerung eine erhöhte Belastung der zum Einsatz kommenden Mechanik mit sich bringen.

In der europäischen Patentschrift EP-0 419 706 B1 mit dem Titel "Verfahren zur numerischen Positions- oder Bahnsteuerung" wird die exakte Berechnung eines beschleunigungsgeführten Bewegungsprofils dargestellt, bei dem die Zeitdiskretisierung berücksichtigt ist. Zusätzlich wird ruckbegrenzt, indem die Beschleunigungswerte durch Mittelwertbildung gefiltert werden. Da hierbei jedoch der Ruck nicht kausal, sondern nur indirekt aus den Beschleunigungswerten vorgebbar ist, treten Probleme bei der Berechnung von Bremswegen auf. Um einen Bremsweg einfach berechnen zu können, müßte das abzufahrende Bewegungsprofil der einzelnen Datensätze im voraus bekannt sein. Das besitzt jedoch den Nachteil, daß diese Vorgehensweise im Widerspruch zu erwünschten Online-Override-Änderungen steht.

In der europäischen Patentanmeldung EP-94116655.5 mit dem Titel "Ruckbegrenzte Geschwindigkeitsführung" ist das Schaffen von zusätzlichen Freiheitsgraden durch Einführen jeweils einer zusätzlichen Phase beim Anfahren der Sollgeschwindigkeit und beim Einbremsen in das Ziel vorgeschlagen worden. Das Anfahren der Sollgeschwindigkeit erfolgt dabei nahezu exakt, weil zugelassen wird, daß sich der Ruck in der zusätzlich eingeführten Phase, dem Übergangstakt auf Sollgeschwindigkeit, taktasynchron ändern kann. Das Einfahren in die Zielposition wird ebenfalls nahezu exakt erreicht, wenn zum Zeitpunkt des Bremsbeginns die vorhandene Beschleunigung gleich Null ist. Diese Bedingung ist allerdings selten - insbesondere bei kurzen Verfahrwegen - erfüllt, so daß auch hier eine Approximation der kontinuierlichen Zeitpunkte durch das diskrete Zeitraster erfolgen muß.

In allen geschilderten Lösungsansätzen besteht somit keine Möglichkeit, die Bewegung für diskrete Abtastsysteme exakt taktsynchron sowie zeitoptimal zu führen.

Der Erfindung liegt daher die Aufgabe zugrunde, ein Verfahren sowie eine dazugehörige Vorrichtung der eingangs genannten Art so auszubilden, daß eine Bewegungsführung für zeitdiskrete Abtastsysteme, bei denen sich die Stellgröße nur im festen Zeitraster bzw. Interpolationstakt der Steuerung ändern kann, exakt taktsynchron sowie zeitoptimal geführt werden kann.

Gemäß der Erfindung wird diese Aufgabe durch folgende Verfahrensschritte gelöst:

1.1 als Stellgröße dient die Ableitung beliebiger Ordnung m von der Bahngeschwindigkeit oder beliebiger Ordnung m+1 von der Lage, wobei bevorzugterweise die Beschleunigung oder der Ruck verwendet werden,

1.2 es wird aus den n=m+1 zeitdiskreten Systemmatrizengleichungen des Abtastsystems bei gegebenem Anfangszustand und gewünschtem Zustandsvektor die exakte Steuerfolge für die Bewegungsführung bestimmt,

1.3 die Stellgröße wird entsprechend den bestimmten Werten der Steuerfolge im Zeitraster des Abtastsystemes, bei numerischen Steuerungen für Werkzeugmaschinen und Roboter insbesondere im Interpolationstakt, geändert.

In einer ersten vorteilhaften Ausgestaltung des Verfahrens gemäß der vorliegenden Erfindung wird eine mathematische Eigenschaft des zur Anwendung gelangenden Systemmatrizengleichungssystemes dazu benutzt, die exakte taktsynchrone Bewegungsführung im Hinblick auf das zeitdiskrete Abtastsystem beeinflussende Faktoren, insbesondere auf die Dynamik von elektrischen Antrieben, zu optimieren. Dies wird durch folgenden weiteren Verfahrensschritt erreicht:

2.1 die Zahl der dadurch bedingten zusätzlichen Freiheitsgrade wird zum Erfüllen von Nebenkriterien verwendet, insbesondere zur Schonung der eingesetzten Mechanik durch Minimierung der mittleren Stellgrößenenergie.

In einer weiteren vorteilhaften Ausgestaltung des Verfahrens gemäß der vorliegenden Erfindung wird eine Steuerfolge für ein Verfahren auf eine vorgegebene Sollgeschwindigkeit für eine Bewegungsführung ermittelt, welche die dynamischen Fähigkeiten des zugrundeliegenden zeitdiskreten Abtastsystems, insbesondere eines elektrischen Antriebes, so berücksichtigt, daß die Bewegungsführung zeitoptimal durchgeführt werden kann. Das Verfahren auf eine vorgegebene Sollgeschwindigkeit erfolgt dazu gemäß den folgenden Verfahrensschritten:

3.1 es wird solange mit maximal zulässigem Ruck die Beschleunigung aufgebaut, wie die maximal zulässige Beschleunigung in der folgenden Tastperiode nicht überschritten zu werden droht, und der Ruck dann soweit reduziert, daß die maximal zulässige Beschleunigung exakt zum folgenden Tastzeitpunkt erreicht wird,

3.2 mit Erreichen der maximal zulässigen Beschleunigung wird mit dieser in Richtung der Sollgeschwindigkeit beschleunigt,

3.3 dabei wird ständig überprüft, ob unter Beibehaltung der aktuellen Stellgröße im Rahmen eines look ahead bei dem folgenden Tastzeitpunkt oder auch in einem Intervall von folgenden Tastzeitpunkten unter Berücksichtigung gegebener Beschleunigungs- und Ruckmöglichkeiten in den verbleibenden Tastperioden die erreichte Beschleunigung auf Null abgebaut werden kann,

3.4 ist dies für mindestens einen der vorausschauend untersuchten Tastzeitpunkte nicht mehr der Fall, so wird zum dem frühesten davon vorangehenden Tastzeitpunkt mit möglichst negativem Ruck, wo möglich mit maximal zulässigem negativen Ruck, die Beschleunigung so abgebaut, daß die Sollgeschwindigkeit zum vorgegebenen Zeitpunkt ohne Überschwingungen erreicht wird.

Adäquat zur vorangehenden Ausgestaltung wird in einer weiteren vorteilhaften Weiterbildung des Verfahrens gemäß der vorliegenden Erfindung eine Steuerfolge für ein Einbremsen in einen vorgegebenen Zielzustand unter Berücksichtigung der Dynamik des zugrundeliegenden zeitdiskreten Abtastsystems, insbesondere eines elektrischen Antriebes, auf zeitoptimale Art und Weise ermöglicht. Dazu wird der Einbremsvorgang in den vorgegebenen Zielzustand mit folgenden Verfahrensschritten durchgeführt:

4.1 eine eventuell noch vorhandene positive Beschleunigung wird mit möglichst negativem Ruck, wo möglich mit maximal zulässigem negativen Ruck, auf Null abgebaut,

4.2 es wird ebenfalls mit möglichst negativem Ruck, wo möglich mit maximal zulässigem negativen Ruck, die für das Einbremsen erforderliche negative Beschleunigung aufgebaut,

4.3 wird dabei die maximal zulässige negative Beschleunigung erreicht, so wird mit dieser weiter mit einem Ruck von Null abgebremst,

4.4 dabei wird ständig überprüft, ob unter Beibehaltung der aktuellen Stellgröße im Rahmen eines look ahead bei dem folgenden Tastzeitpunkt oder auch in einem Intervall von folgenden Tastzeitpunkten unter Berücksichtigung gegebener Beschleunigungs- und Ruckmöglichkeiten in den verbleibenden Tastperioden der verbleibende Satzrestweg kürzer als der erforderliche Bremsweg wird,

4.5 ist dies für mindestens einen der vorausschauend untersuchten Tastzeitpunkte der Fall, so wird zum dem frühesten davon vorangehenden Tastzeitpunkt mit möglichst positivem Ruck, wo möglich mit maximal zulässigem positiven Ruck, die negative Beschleunigung abgebaut und der Zielzustand erreicht.

In einer alternativen Ausgestaltung wird ebenfalls eine Steuerfolge für ein Einbremsen in einen vorgegebenen Zielzustand ermittelt, wobei nunmehr trotz Restriktionen von Beschleunigung und Ruck keine Abweichungen vom zeitoptimalen Verlauf des Einbremsvorganges hingenommen werden müssen, sondern zu jeder Zeit die vollen dynamischen Möglichkeiten des zeitkontinuierlichen Abtastsystemes, insbesondere eines elektrischen Antriebes, ausgenutzt werden können. Dazu erfolgt der Einbremsvorgang in den vorgegebenen Zielzustand nach folgenden Verfahrensschritten:

5.1 eine eventuell noch vorhandene positive Beschleunigung wird mit möglichst negativem Ruck, wo möglich mit maximal zulässigem negativen Ruck, auf Null abgebaut,

5.2 es wird ebenfalls mit möglichst negativem Ruck, wo möglich mit maximal zulässigem negativen Ruck, die für das Einbremsen erforderliche negative Beschleunigung aufgebaut,

5.3 dabei wird ständig überprüft, ob unter Beibehaltung der aktuellen Stellgröße im Rahmen eines look ahead bei dem folgenden Tastzeitpunkt oder auch in einem Intervall von folgenden Tastzeitpunkten unter Berücksichtigung gegebener Beschleunigungs- und Ruckmöglichkeiten in den verbleibenden Tastperioden der verbleibende Satzrestweg kürzer als der erforderliche Bremsweg wird,

5.4 ist dies für mindestens einen der vorausschauend untersuchten Tastzeitpunkte der Fall, so wird zum dem frühesten davon vorangehenden Tastzeitpunkt mit möglichst negativem Ruck die Beschleunigung abgebaut,

5.5 wird dabei die maximal zulässige Beschleunigung und/oder der maximal zulässige Ruck überschritten, so wird die Zahl der Taktperioden für den Einbremsvorgang so erhöht, daß die zulässige Beschleunigungsgrenze und/oder Ruckgrenze nicht oder nur im Rahmen der zulässigen Toleranz unterschritten wird, und der Bremseinsatzpunkt um soviele Tastzeitpunkte vorverlegt, daß der Zielzustand mit einer Beschleunigung und einem Ruck von Null erreicht wird.

In einer weiteren vorteilhaften Ausgestaltung des Verfahrens gemäß der vorliegenden Erfindung wird der Rechenaufwand zur Ermittlung einer geeigneten Steuerfolge über eine exakte taktsynchrone Bewegungsführung für ein Einbremsen in einen vorgegebenen Zielzustand reduziert. Dadurch läßt sich eine Vereinfachung des Verfahrens erreichen und der Aufwand einer danach arbeitenden Steuerung wird verringert, so daß eine kostengünstigere Lösung herbeigeführt werden kann. Dazu sind folgende alternative Verfahrensschritte vorgesehen:

6.1 das Abbauen einer evtuell noch vorhandenen positiven Beschleunigung mit möglichst negativem Ruck auf Null erfolgt durch Approximation im Zeitdiskreten aus dem kontinuierlich bestimmten Bremsvorgang,

6.2 das Aufbauen der für das Einbremsen erforderlichen negativen Beschleunigung mit möglichst negativem Ruck erfolgt ebenfalls durch Approximation im Zeitdiskreten aus dem kontinuierlich bestimmten Bremsvorgang.

Um ein solches vorteilhafte Verfahren zur taktsynchronen Bewegungsführung zeitdiskreten Abtastsystemen auf einfache Art und Weise zu realisieren, wird die Aufgabe mittels einer Vorrichtung mit folgenden Elementen gelöst, die eine besonders günstige und effektive Realisierung ermöglichen:

7.1 es sind Mittel, insbesondere ein Mikroprozessorsystem, zur Ableitung einer Stellgröße nach beliebiger Ordnung m von der Bahngeschwindigkeit oder beliebiger Ordnung m+1 von der Lage sowie zur Bestimmung einer exakten Steuerfolge aus einem zeitdiskreten n=m+1 Systemmatrizengleichungssystem des Abtastsystems bei gegebenem Anfangszustand und gewünschtem Zustandsvektor für die Bewegungsführung vorgesehen,

7.2 es sind Mittel zur taktsynchronen Beeinflussung der Stellgröße entsprechend den bestimmten Werten der Steuerfolge vorgesehen,

7.3 es sind Mittel zum Integrieren der Stellgröße nach beliebiger Ordnung n und damit zur Bestimmung der Bahngeschwindigkeit und der Bahn aus der Stellgröße vorgesehen.

Die mit der Erfindung erzielten Vorteile bestehen insbesondere darin, daß eine Bewegungsführung in zeitdiskreten Abtastsystemen exakt taktsynchron erfolgen kann und darüber hinaus zeitoptimal geführt werden kann, insbesondere im Hinblick auf die dynamischen Möglichkeiten des zeitdiskreten Abtastsystemes, vor allem im Falle der Anwendung eines elektrischen Antriebes, wobei das Verfahren aufgrund einer geeigneten Implementierung der Schritte zur Ermittlung der Steuerfolge auf besonders einfache und effektive Art und Weise erfolgen kann. Darüber hinaus werden für die Ermittlung geeigneter Steuerfolgen vorteilhafte Bewegungsführungen für ein Verfahren auf eine vorgegebene Sollgeschwindigkeit sowie für ein Einbremsen in einen vorgegebenen Ziel zustand geschaffen, welche die Ermittlung einer Steuerfolge ermöglichen, die die dynamischen Möglichkeiten des zeitdiskreten Abtastsystemes optimal ausnutzt und die Steuerfolge im Hinblick auf die Bewegungsführung optimiert. Im Hinblick auf eine Verringerung des dazu erforderlichen Rechenaufwandes werden darüber hinaus alternative Vorgehensweisen geschaffen, die eine kostengünstigere Implementierung ermöglichen. Desweiteren wird eine Vorrichtung geschaffen, die die oben genannten Vorteile beinhaltet und darüber hinaus kostengünstig mit geringem Aufwand realisiert werden kann und effektiv arbeitet.

Weitere Vorteile und erfinderische Einzelheiten ergeben sich aus nachfolgender Beschreibung der rechentechnischen Grundlagen, sowie mehrerer Anwendungsbeispiele anhand der Zeichnungen und in Verbindung mit den Unteransprüchen.

Zur weiteren Erläuterung der Erfindung wird auf die beigefügten Zeichnungen bezug genommen. Es zeigen:

FIG 1    Strukturbild eines zeitkontinuierlichen Systemes mit möglichen Stellgrößen zur Bewegungsführung,

FIG 2    Strukturbild eines zeitdiskreten Abtastsystemes mit möglichen Stellgrößen zur Bewegungsführung,

FIG 3    Eingangs- und Ausgangssignal eines Sample-&-Hold-Gliedes zur Erzeugung zeitdiskreter Werte,

FIG 4    Strukturbild eines zeitdiskreten Systemes mit Stellgröße am Beispiels des Rucks r,

FIG 5    Verlauf von Ruck-, Beschleunigung und Geschwindigkeit beim Anfahren einer vorgegebenen Sollgeschwindigkeit,

FIG 6    Zusammenwirken von Ruck-, Beschleunigung und Geschwindigkeit in der Phasenebene beim Anfahren einer vorgegebenen Sollgeschwindigkeit,

FIG 7    diskrete Bewegungsführung auf eine vorgegebene Sollgeschwindigkeit, wobei die Größen normiert sind,
FIG 8    diskrete Bewegungsführung auf eine vorgegebene Sollgeschwindigkeit, wobei Zeitraster und zeitoptimaler kontinuierlicher Bewegungsvorgang zusammenfallen,
FIG 9    Abschnitt eines zeitoptimalen Abbremsvorganges in eine vorgegebene Zielposition,
FIG 10   diskrete Bewegungsführung eines Abbremsvorganges in eine Zielposition ohne Begrenzung beim Einbremsen in den Zielpunkt,
FIG 11   diskrete Bewegungsführung eines Abbremsvorganges in eine Zielposition mit zusätzlicher Begrenzung beim Einbremsen in den Zielpunkt,
FIG 12   diskrete Bewegungsführung, bei der die vorgegebene Sollgeschwindigkeit aufgrund zu kurzer Satzlänge nicht erreicht wird.

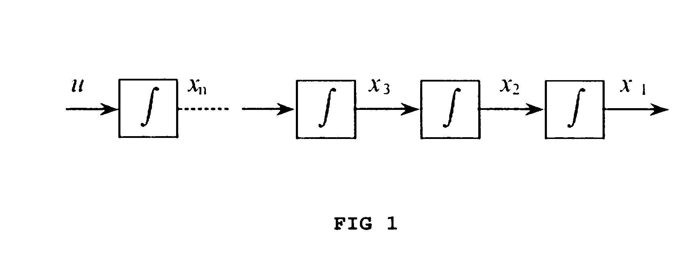

Dabei geht die Erfindung von folgender Erkenntnis aus. Bei der Bewegungsführung dient die m-te Ableitung der Bahngeschwindigkeit v oder die m+1 -te Ableitung der Lage bzw. des Weges s als Stellgröße. Bevorzugterweise wird auf die Bahngeschwindigkeit v bezug genommen, da diese in der Regel direkt erfaßt wird bzw. zur Ansteuerung von Antrieben verwendet wird. Das kontinuierliche System läßt sich hierfür zur Veranschaulichung durch ein Strukturbild mit n=m+1 Speichern bzw. Integrierern beschrieben, so dargestellt in FIG 1. Dabei bezeichnen:

$x_1 :=$ s = Weg bzw. Lage
$x_2 :=$ v = Geschwindigkeit
$x_3 :=$ a = Beschleunigung
$x_4 :=$ r = Ruck

$\frac{dx_n}{dt} = \dot{x}_n :=$ u = Stellgröße

Der Informationsfluß dieses Strukturbildes kann auf mathematische Form durch folgendes Differentialgleichungssystem (1) beschrieben werden:

$$\begin{bmatrix} \dot{x}_1 \\ \dot{x}_2 \\ \dot{x}_3 \\ \cdots \\ \cdots \\ \dot{x}_n \end{bmatrix} = \begin{bmatrix} 0 & 1 & 0 & 0 & & \cdots & 0 \\ 0 & 0 & 1 & 0 & & \cdots & 0 \\ 0 & 0 & 0 & 1 & 0 & \cdots & 0 \\ \cdots & & & & & & \\ \cdots & & & & & 0 & 1 \\ 0 & 0 & & \cdots & & 0 & 0 \end{bmatrix} \cdot \begin{bmatrix} x_1 \\ x_2 \\ x_3 \\ \cdots \\ \cdots \\ x_n \end{bmatrix} + \begin{bmatrix} 0 \\ 0 \\ 0 \\ .. \\ .. \\ 1 \end{bmatrix} \cdot u \qquad (1)$$

In Vektor- bzw. Matrizenschreibweise läßt sich dieses Gleichungssystem folgendermaßen vereinfacht darstellen:

$$\dot{\vec{x}} = F \cdot \vec{x} + \vec{g} \cdot u$$

Löst man das Differentialgleichungssystem (1), so erhält man für Zeitpunkte $t \geq t_0$ :

$$\vec{x}(t) = e^{F(t-t_0)} \cdot \vec{x}(t_0) + \int_{t_0}^{t} e^{F(t-\tau)} \cdot \vec{g} \cdot u(\tau)d\tau \qquad (2)$$

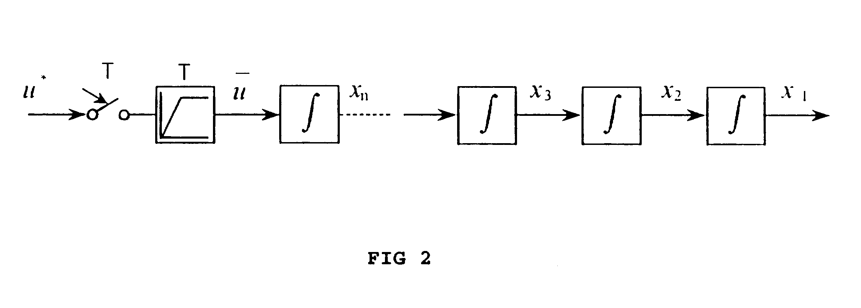

Dabei beschreibt $\vec{x}(t_0)$ den Anfangszustand des Systems zum Zeitpunkt $t_0$.
Wird dem kontinuierlichen System aus FIG 1 ein Abtast/Halte-Glied, auch als Sample&Hold-Glied bezeichnet, vorgeschaltet, so erhält man ein zeitdiskretes Abtastsystem, bei dem sich der Streckeneingang - die Stellgröße u - nur zu den diskreten Abtastzeitpunkten $k \cdot T$, mit k=0,1,2, ... und T = Tastzeit, ändern kann. FIG 2 zeigt das Strukturbild eines solchen zeitdiskreten Abtastsystems.

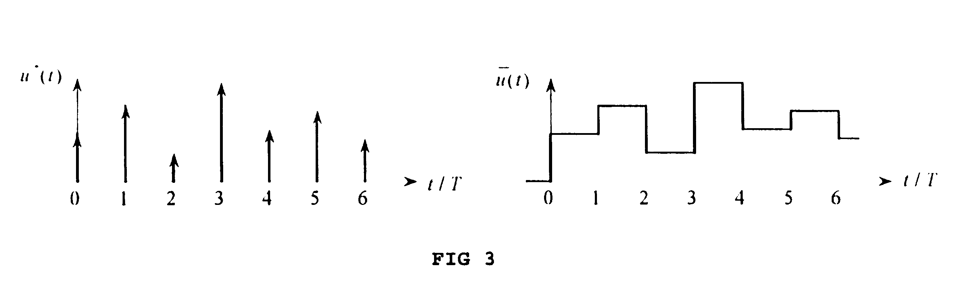

In FIG 3 sind Eingangsignale eines Sample&Hold-Gliedes, dargestellt anhand einer Zahlenfolge $u^*$, und die korrespondierenden Ausgangssignale $\bar{u}$ gezeigt, die auf einer über die Tastperioden T normierten Zeitachse t/T aufgetragen sind. Die Zahlenfolge $u^*$ wird beispielsweise von einem Rechner erzeugt. Mit Hilfe des Sample&Hold-Gliedes entsteht eine Treppenkurve $\bar{u}$, mit der das kontinuierliche Teilsystem angesteuert wird.

Da der Verlauf der Ausgangssignale $\bar{u}(t) = u_k = const$ für Zeitpunkte $k \cdot T \leq t < (k+1) \cdot T$ innerhalb einzelner Tastperioden konstant ist, lassen sich mit $k \cdot T = t_0$ für das Abtastsystem die Zustandsgrößen zum Tastzeitpunkt $(k+1) \cdot T$ auf einfache Weise aus der Berechnungsvorschrift (2) folgendermaßen bestimmen:

$$\vec{x}[(k+1)T] = e^{F \cdot T} \cdot \vec{x}(kT) + \int_{kT}^{(k+1)T} e^{F[(k+1)T-\tau]} \cdot \vec{g} \cdot u_k \, d\tau$$

$$\vec{x}[(k+1)T] = e^{F \cdot T} \cdot \vec{x}(kT) + \int_{kT}^{(k+1)T} e^{F[(k+1)T-\tau]} \cdot \vec{g} \, d\tau \cdot u_k$$

Substituiert man $(k+1)T - \tau := v$, so folgt daraus die folgende Berechnungsvorschrift (3):

$$\vec{x}[(k+1)T] = e^{F \cdot T} \cdot \vec{x}(kT) + \int_{0}^{T} e^{F \cdot v} \cdot \vec{g} \, dv \cdot u_k \qquad (3)$$

Vereinfachend läßt sich diese Berechnungsvorschrift auch in Vektor- bzw. Matrizenschreibweise darstellen:

$$\vec{x}_{k+1} = A \cdot \vec{x}_k + \vec{b} \cdot u_k$$

Die diskrete Systemmatrix $A = e^{F \cdot T}$ läßt sich unter anderem auf einfache Weise mittels der Laplace-Transformation ermitteln:

$$A = L^{-1}[(sI - F)^{-1}]_{t=T}$$

Dabei beschreibt $s$ den Laplace- Operator, $I$ eine Einheitsmatrix.

Speziell für den Fall des n - Speichersystems, wie in FIG 1 und FIG 2 gezeigt, folgt mit (3) und (1):

$$\begin{bmatrix} x_{1,k+1} \\ x_{2,k+1} \\ x_{3,k+1} \\ \dots \\ \dots \\ x_{n,k+1} \end{bmatrix} = \begin{bmatrix} 1 & T & T^2/2 & T^3/3! & \dots & T^{(n-1)}/(n-1)! \\ 0 & 1 & T & T^2/2 & \dots & T^{(n-2)}/(n-2)! \\ 0 & 0 & 1 & T & \dots & T^{(n-3)}/(n-3)! \\ \dots & & & & & \dots \\ \dots & & & & & \dots \\ 0 & 0 & 0 & 0 & & 1 \end{bmatrix} \cdot \begin{bmatrix} x_{1,k} \\ x_{2,k} \\ x_{3,k} \\ \dots \\ \dots \\ x_{n,k} \end{bmatrix} + \begin{bmatrix} T^n/n! \\ T^{(n-1)}/(n-1)! \\ T^{(n-2)}/(n-2)! \\ \dots \\ \dots \\ T \end{bmatrix} \cdot u_k$$

$$(4)$$

Dies läßt sich ebenfalls vereinfachend in Vektor- bzw. Matrizenschreibweise darstellen:

$$\vec{x}_{k+1} = A \cdot \vec{x}_k + \vec{b} \cdot u_k$$

Bei einem n - Speichersystem stellt $A$ eine n x n - Matrix und $\vec{b}$ einen n x 1 - Vektor dar. Mit $A$ und $\vec{b}$ läßt sich nun der Zustandsvektor $\vec{x}_{k+v}$ zu einem Tastzeitpunkt $(k+1) \cdot T$ aus dem Zustandsvektor $\vec{x}_k$ und der Stellgröße $u_k$ eines vorangehenden Tastzeitpunktes $k \cdot T$ berechnen.

Dementsprechend folgt aus (4) für den Zeitpunkt $(k+2) \cdot T$:

$$\vec{x}_{k+2} = A \cdot \vec{x}_{k+1} + \vec{b} \cdot u_{k+1} = A \cdot [A \cdot \vec{x}_k + \vec{b} \cdot u_k] + \vec{b} \cdot u_{k+1}$$

Oder übersichtlicher dargestellt:

$$\vec{x}_{k+2} = A^2 \cdot \vec{x}_k + [A \cdot \vec{b} \quad \vec{b}] \cdot \begin{bmatrix} u_k \\ u_{k+1} \end{bmatrix}$$

Für den Zeitpunkt $(k+3) \cdot T$ folgt dementsprechend:

$$\vec{x}_{k+3} = A^3 \cdot \vec{x}_k + [A^2 \cdot \vec{b} \quad A \cdot \vec{b} \quad \vec{b}] \cdot \begin{bmatrix} u_k \\ u_{k+1} \\ u_{k+2} \end{bmatrix}$$

Für einen allgemeinen Zeitpunkt $(k+v) \cdot T$ läßt sich damit folgende allgemeingültige Berechnungsvorschrift (5) angeben:

$$\vec{x}_{k+v} = A^v \cdot \vec{x}_k + \underbrace{[A^{v-1} \cdot \vec{b} \quad A^{v-2} \cdot \vec{b} \quad ... \quad A \cdot \vec{b} \quad \vec{b}]}_{S} \cdot \underbrace{\begin{bmatrix} u_k \\ u_{k+1} \\ ... \\ u_{k+v-2} \\ u_{k+v-1} \end{bmatrix}}_{\vec{u}} \qquad (5)$$

Der Zustandsvektor eines zeitdiskreten Abtastsystems zum Zeitpunkt $(k+v) \cdot T$ kann also berechnet werden, wenn der Anfangszustand $\vec{x}_k$ des Systems zum Zeitpunkt $k \cdot T$ sowie die dazwischenliegende Steuerfolge, dargestellt durch den Steuervektor $\vec{u}$, bekannt sind.

Gemäß der vorliegenden Erfindung wird aus der Beziehung (5) nun jedoch umgekehrt die Steuerfolge $\vec{u}$ berechnet, die erforderlich ist, um ein Abtastsystem von einem gegebenen Anfangsin einen gewünschten Endzustand zu überführen. Die Stellgröße u wird dann für eine exakte taktsynchrone Bewegungsführung zu den Tastzeitpunkten entsprechend den Werten der Steuerfolge $\vec{u}$ geändert. Hierzu wird die Berechnungsvorschrift (5) nach der Steuerfolge $\vec{u}$ aufgelöst. Man erhält somit folgende Berechnungsvorschrift zur Bestimmung einer Steuerfolge $\vec{u}$:

$$\vec{u} = S^{-1} \cdot [\vec{x}_{k+n} - A^n \cdot \vec{x}_k] \qquad (6)$$

Um ein System der Ordnung n von einem Anfangszustand in ein gewünschtes Ziel zu überführen, sind mindestens n Schaltvorgänge - gleichbedeutend mit n Abtastintervallen $n \cdot T$ - erforderlich. Man spricht in diesem Zusammenhang auch von einem sogenannten Deadbeat-Verhalten. Die Matrizen $A^n$ sowie $S$ haben in diesem Fall die Dimension n x n, so daß sich genau n Gleichungen für die n unbekannten Stellgrößen ergeben.

Für $v > n$, also den Fall, daß die Zahl der für die Bewegungsführung zur Verfügung stehenden Tastperioden größer der Ordnung des Gleichungssystems wird, ist ein solches Gleichungssystem jedoch unterbestimmt, was zur Folge hat, daß unendlich viele Steuerfolgen existieren, um in das Ziel zu gelangen. Wenn man Berechnungsvorschrift (5) nach $S \cdot \vec{u}$ freistellt, wird das sofort anschaulich klar:

$$
\begin{bmatrix} S_{11} & S_{12} \dots S_{1n} & S_{1n+1} \dots S_{1v} \\ S_{21} & S_{22} \dots S_{2n} & S_{2n+1} \dots S_{2v} \\ S_{31} & S_{32} \dots S_{3n} & S_{3n+1} \dots S_{3v} \\ \dots & \dots & \dots \\ S_{n1} & S_{n2} \dots S_{nn} & S_{nn+1} \dots S_{nv} \end{bmatrix} \cdot \begin{bmatrix} u_k \\ u_{k+1} \\ u_{k+2} \\ \dots \\ u_{k+n-1} \\ u_{k+n} \\ u_{k+n+1} \\ \dots \\ \dots \\ u_{k+v-1} \end{bmatrix} = \begin{bmatrix} x_{1k+v} \\ x_{2k+v} \\ x_{3k+v} \\ \dots \\ x_{nk+v} \end{bmatrix} - \begin{bmatrix} A_{11} \dots A_{1n} \\ A_{21} \dots A_{2n} \\ A_{31} \dots A_{3n} \\ \dots \\ A_{n1} \dots A_{nn} \end{bmatrix}^v \cdot \begin{bmatrix} x_{1k} \\ x_{2k} \\ x_{3k} \\ \dots \\ x_{nk} \end{bmatrix}
$$

Mit den $v$ Steuerwerten sind ebenso wie vorher nur n Gleichungen zu erfüllen. Zusätzlich hat man jetzt also $(v-n)$ Freiheitsgrade, die erfindungsgemäß dazu benutzt werden können, ein Nebenkriterium zu erfüllen.

Zur Schonung der Mechanik der Werkzeugmaschine bietet es sich an, gleichzeitig zur zeitoptimalen Bewegungsführung die Summe der Quadrate der Steuerfolge, die der mittleren Stellgrößenenergie entspricht, zu minimieren. Dies wird durch die folgende Beziehung mathematisch ausgedrückt:

$$
\vec{u}^T \cdot \vec{u} = \sum_{i=0}^{v-1} u_{k+i}^2 \overset{!}{=} Min
$$

Diese Bedingung ist genau dann erfüllt, wenn der Vektor $\vec{u}$, die Steuerfolge, der Gleichung

$$
\vec{u} = \underbrace{S^T \cdot (S \cdot S^T)^{-1}}_{S^+} \cdot (\vec{x}_{k+v} - A^v \cdot \vec{x}_k) \tag{7}
$$

genügt. Da $S^+ \cdot S$ die Einheitsmatrix ergibt, wird $S^+$ auch als "Pseudo-Inverse-Matrix" von $S$ bezeichnet.

Die vorangegangenen Betrachtungen werden im folgenden Ausführungsbeispiel auf den Fall der Bewegungsführung angewendet, daß der Ruck r als Stellgröße gewählt wird. Selbstverständlich können zur Druchführung des erfindungsgemäßen Verfahrens sowie zum Betrieb einer entsprechenden Vorrichtung auch beliebige andere Ableitungen der Bahngeschwindigkeit v, insbesondere auch die Beschleunigung a, herangezogen werden.

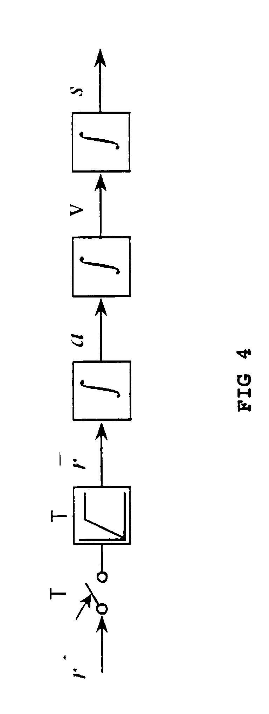

Für den Fall des Ausführungsbeispiels vereinfacht sich das Strukturbild, dargestellt in FIG 4, und die diskreten Systemgleichungen (4) vereinfachen sich entsprechend:

$$\begin{bmatrix} s_{k+1} \\ v_{k+1} \\ a_{k+1} \end{bmatrix} = \begin{bmatrix} 1 & T & T^2/2 \\ 0 & 1 & T \\ 0 & 0 & 1 \end{bmatrix} \cdot \begin{bmatrix} s_k \\ v_k \\ a_k \end{bmatrix} + \begin{bmatrix} T^3/6 \\ T^2/2 \\ T \end{bmatrix} \cdot r_k \qquad (8)$$

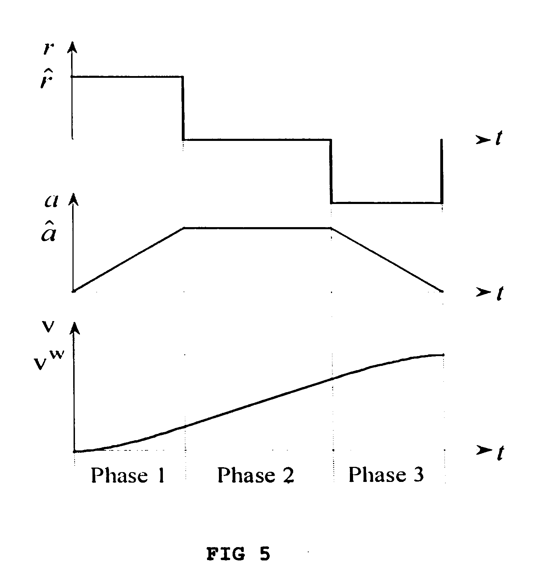

Prinzipiell treten dabei zwei unterschiedliche Bewegungsabschnitte auf. Dies sind zum einen das Anfahren einer programmierten Sollgeschwindigkeit $v_{soll}$, in FIG 5 dargestellt durch $v^w$, zum anderen das Einbremsen in einen Ziel zustand, das einzuleiten ist, wenn der verbleibende Satzrestweg kürzer als der erforderliche Bremsweg zu werden droht.

Im Zeitkontinuierlichen setzt sich das Anfahren einer Sollgeschwindigkeit $v_{soll}$ bzw. $v^w$ aus maximal drei Phasen zusammen, die in FIG 5 am Verlauf von Ruck r, Beschleunigung a und Bahngeschwindigkeit v dargestellt sind.

In Phase 1 wird mit maximalem Ruck $\hat{r}$ die maximal zulässige Beschleunigung $\hat{a}$ aufgebaut. In Phase 2 wird mit maximaler Beschleunigung in Richtung der Sollgeschwindigkeit $v_{soll}$ bzw. $v^w$ beschleunigt. In Phase 3 wird mit maximalem negativen Ruck $-\hat{r}$ die Beschleunigung wieder abgebaut, damit die Sollgeschwindigkeit $v_{soll}$ bzw. $v^w$ überschwingfrei erreicht wird.

Abhängig von den Beträgen von $\hat{a}$ und $v^w$ kann Phase 2 entfallen.

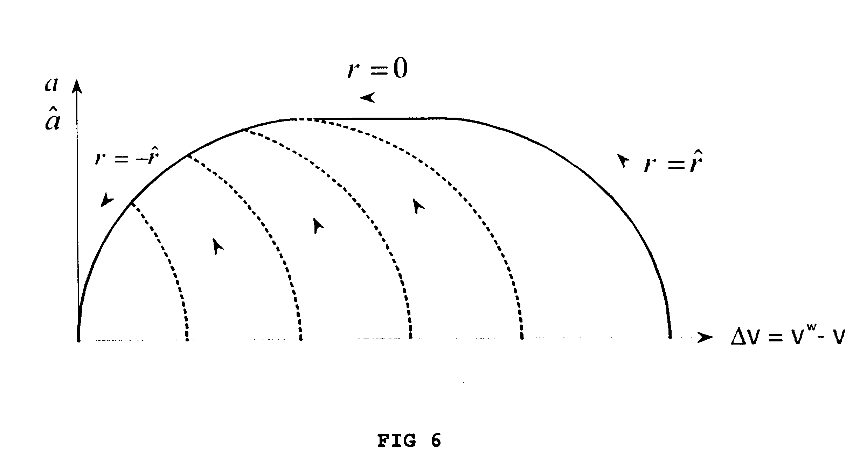

Besonders anschaulich wird das Anfahren der Sollgeschwindigkeit in der Phasenebene, dargestellt in FIG 6, wo der Verlauf der Beschleunigung a(t) über $\Delta v(t) = v^w - v(t)$ aufgetragen ist. Dadurch wird das Zusammenwirken von Ruck r, Beschleunigung a und Bahngeschwindigkeit v im Bezug auf die Sollgeschwindigkeit $v_{soll}$ bzw. $v^w$ deutlich.

Der Bewegungsvorgang sieht dabei so aus, daß ausgehend von einem der rechten Parabeläste, für die $r=\hat{r}$ ist, auf die Ziel-bzw. Bremsparabel mit $r=-\hat{r}$ übergegangen wird, wobei zwischendurch ggf. noch das Geradenstück mit $a=\hat{a}$ und $r=0$ durchlaufen wird.

Für die Ziel-/Bremsparabel gilt dazu folgende Gleichung:

$$\Delta v_{BP} = \frac{a_{BP}^2}{2 \cdot \hat{r}} \qquad (9)$$

Solange die Bedingung

$$\Delta v(t) > \Delta v_{BP}(a(t)) = \frac{a(t)^2}{2 \cdot \hat{r}} \qquad (10)$$

sichergestellt ist, kann mit maximal zulässigem Ruck $\hat{r}$ bzw. maximal zulässiger Beschleunigung $\hat{a}$ und $r=0$ beschleunigt werden. Wird dann anstelle (10) die Bedingung (9) erfüllt, ist mit $-\hat{r}$ auf die Bremsparabel überzugehen, um die Zielgeschwindigkeit überschwingfrei zu erreichen.

Die Bewegungsführung müßte im Fall des Anfahrens einer vorgegebenen Sollgeschwindigkeit also zum richtigen Zeitpunkt den Wechsel auf die Bremsparabel einleiten, was allerdings bei Abtastsystemen Probleme bereitet, da der "richtige" Zeitpunkt in der Regel nicht - und wenn, dann rein zufällig - mit dem Abtastraster übereinstimmt.

Um zu gewährleisten, daß die gegebenen Restriktionen $\hat{r}$ und $\hat{a}$ nicht überschritten werden, muß deshalb in der Regel im Zeitdiskreten bereits eher, maximal ein Takt früher, mit dem Abbremsen auf die Zielgeschwindigkeit begonnen werden. Anhand der diskreten Systemgleichungen (8) wird dabei überprüft, ob unter Beibehaltung der Stellgröße u beim nächsten Tastzeitpunkt die Bedingung (10) noch erfüllt ist, anderenfalls wird der Bremsvorgang noch im aktuellen Tastintervall eingeleitet. Im Rahmen eines sogenannen 'look ahead' können auch mehrere als nur der darauffolgende Tastzeitpunkt betrachtet werden. So wird beispielsweise ein vorher definiertes Intervall beliebig vieler Tastzeitpunkte daraufhin betrachtet, ob unter Beibehaltung der Stellgröße u beim jeweils nächsten Tastzeitpunkt die Bedingung (10) noch erfüllt ist. Wird der verbleibende Restweg für einen Bremsvorgang zu kurz, so wird zum davorliegenden Tastzeitpunkt der Bremsvorgang in der Bewegungsführung eingeleitet.

Das Einleiten des Bremsvorganges erfolgt dabei folgendermaßen. Zunächst wird die Zeitspanne berechnet, die erforderlich wäre, um die im Tastzeitpunkt $k \cdot T$ erreichte Beschleunigung auf Null abzubauen:

$$T_{Brems\_kont} = \frac{a_k}{\hat{r}}$$

Da der Zeitpunkt $\boldsymbol{T_{Brems\_kont}}$ wiederum nur rein zufällig ein ganzzahliges Vielfaches der Tastperiode $T$ beträgt, rundet man auf und erhält den diskreten Bremszeitpunkt

$$T_{Brems\_diskret} = ceil(\frac{T_{Brems\_kont}}{T}) \cdot T := v \cdot T \; ; \; v \in \; N \qquad (11)$$

Mit der gemäß Berechnungsvorschrift (11) gefundenen Anzahl der Tastintervalle v kann dann über Berechnungsvorschrift (6) bzw. (7) die erforderliche Stellgrößenfolge $\vec{u}$ errechnet werden, mit der das System in den Zielzustand

$$\vec{x}_{k+v} = \begin{bmatrix} v_{k+v} \\ 0 \end{bmatrix} = \begin{bmatrix} 1 & T \\ 0 & 1 \end{bmatrix}^{v} \cdot \begin{bmatrix} v_k \\ a_k \end{bmatrix} + S \cdot \vec{u}$$

überführt wird.

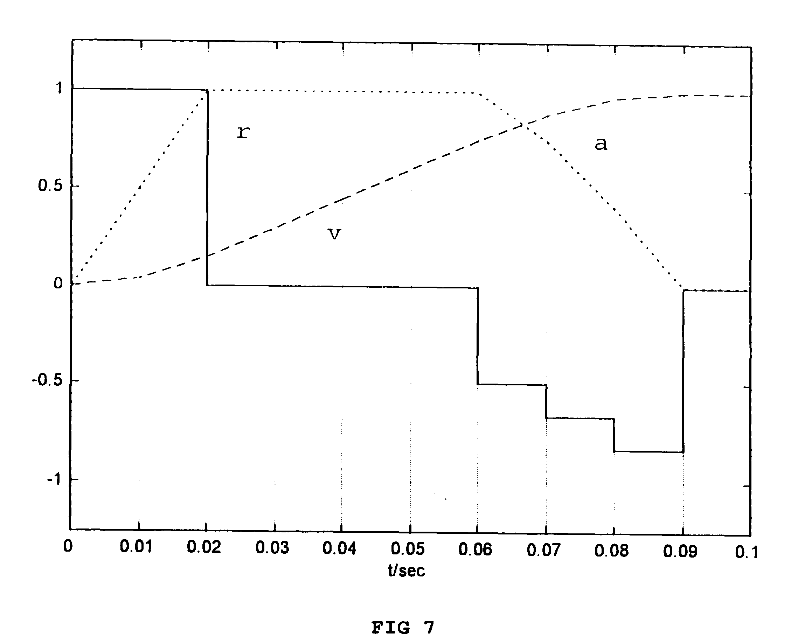

FIG 7 zeigt eine auf die Maschinendaten normierte Bewegungsführung auf eine vorgegebene Sollgeschwindigkeit, die nach diesem Verfahren durchgeführt wurde. Die Bahngeschwindigkeit v ist durch einen gestrichelten Linienzug, die Beschleunigung a durch einen gepunkteten und der Ruck r durch einen durchgehenden Linienzug dargestellt. Der Interpolationstakt ist zu $\boldsymbol{T=10msec}$ angesetzt. Die zugrundegelegten Maschinendaten betragen:

Maximalgeschwindigkeit  $\hat{v} = \boldsymbol{20m/min}$ ,
Maximalbeschleunigung  $\hat{a} = \boldsymbol{5m/sec^2}$ ,
Maximalruck     $\hat{r} = \boldsymbol{250m/sec^3}$.

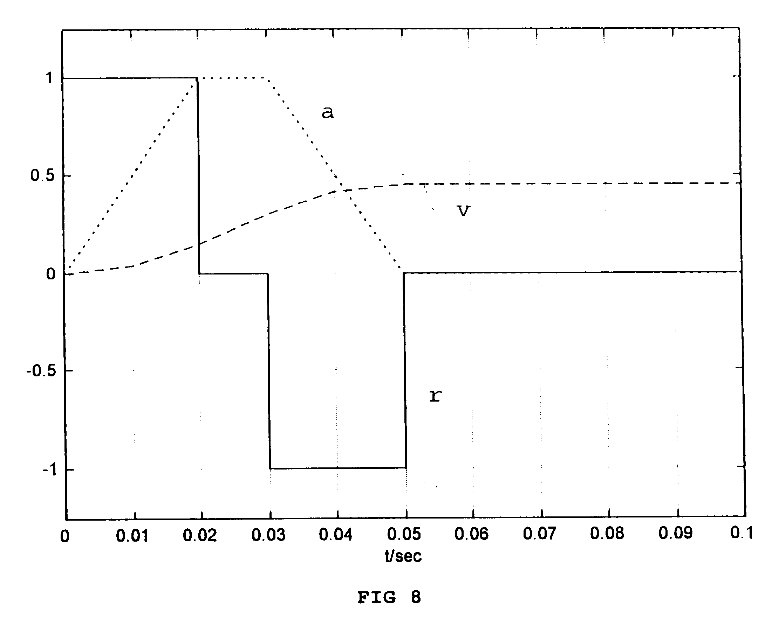

Erwähnenswert ist in diesem Zusammenhang auch, daß die mittels der Pseudoinversen berechnete Stellgrößenfolge $\vec{u}$ mit der zum zeitoptimalen Bewegungsvorgang gehörenden Steuerfolge identisch ist, wenn das Abtastzeitraster in den zeitoptimalen kontinuierlichen Bewegungsvorgang "zufällig" hineinpaßt. FIG 8 zeigt einen solchen Fall anhand einer diskreten Bewegungsführung auf eine vorgegebene Sollgeschwindigkeit $\boldsymbol{v^w=0.45 \cdot \hat{v}}$. Bahngeschwindigkeit v, Beschleunigung a und Ruck r sind durch die bei FIG 7 erläuterten Linienzüge dargestellt, wobei die Bewegungszustände ebenfalls normiert sind.

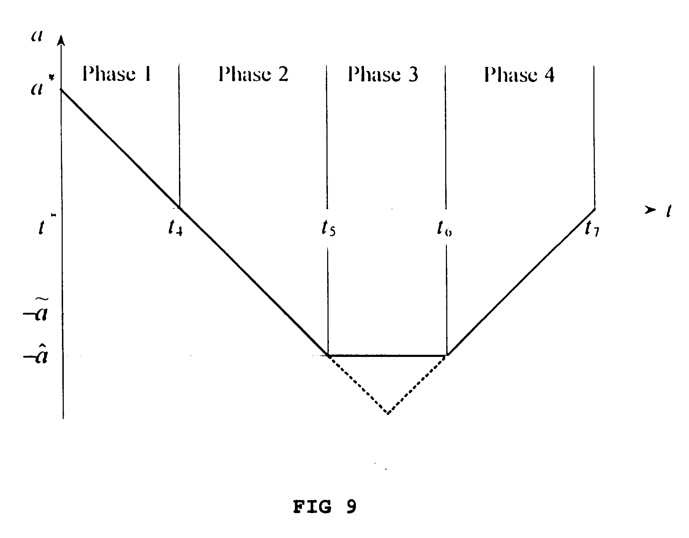

Das zeitoptimale Einbremsen in einen Ziel zustand, das einzuleiten ist, wenn der verbleibende Satzrestweg kürzer als der erforderliche Bremsweg zu werden droht, ist zuerst einmal abhängig davon, ob beim Abbremsen die Maximalbeschleunigung erreicht wird oder nicht. Demnach setzt sich ein zeitkontinuierlicher Abbremsvorgang aus drei oder vier Phasen zusammen, welche in FIG 9 dargestellt sind. Dazu ist der Verlauf der Beschleunigung a über die Zeit t aufgetragen, wobei von einem beliebigen Zustand $\boldsymbol{a^*}$ zu einem Zeitpunkt $\boldsymbol{t^*}$ ausgegangen wird, von dem aus zeitoptimal und zielexakt in eine Zielposition abgebremst werden soll.

Phase 1 dient zum Abbau einer gegebenenfalls zu Beginn des Bremsvorgangs $\boldsymbol{t^*}$ noch vorhandenen positiven Beschleunigung $\boldsymbol{a^*}$ auf Null. Die Geschwindigkeit v steigt hierbei also noch weiter an. In Phase 2 wird wie in Phase 1 mit maximalem negativen Ruck die für die Zielbremsung erforderliche negative Beschleunigung $\boldsymbol{-\tilde{a}}$ aufgebaut, die gegebenenfalls auf $\boldsymbol{-\hat{a}}$ zu begrenzen ist, so angedeutet durch den vom gestrichelten Verlauf abweichenden Verlauf der Beschleunigung a. In Phase 3 ist der Ruck gleich Null, es wird mit $\boldsymbol{-\hat{a}}$ weiter abgebremst. Phase 3 entfällt, wenn |ã|<|â| ist. In Phase 4 wird mit maximalem positiven Ruck die negative Beschleunigung $\boldsymbol{-\tilde{a}}$ bzw. $\boldsymbol{-\hat{a}}$ wieder abgebaut, um so die Zielposition mit der gewünschten Zielgeschwindigkeit und einer Beschleunigung von Null zu erreichen.

Dadurch ist es für jeden beliebigen Anfangszustand möglich, sowohl alle Teilzeiten und Teilwege als auch die gesamt benötigte Bremszeit $\boldsymbol{t_7\text{-}t^*}$ und den gesamt benötigten Bremsweg $\boldsymbol{s(t_7)\text{-}s(t^*)}$ zu berechnen, so daß im Zeitkontinuierlichen die praktische Umsetzung dieses Zeitplans ohne weitere Aufwände erfolgen kann.

Bei der zeitdiskreten Realisierung werden gemäß der vorliegenden Erfindung aufgrund des Abtastrasters weitere Anpassungen und Optimierungen vorgenommen. Die Erfahrung hat hier gezeigt, daß bessere Ergebnisse erzielbar sind, wenn die Begrenzungen nicht direkt aus dem Zeitkontinuierlichen übernommen, sondern nach einer eigenen Strategie aus der diskret berechneten Steuerfolge vorgenommen werden. So erlaubt die Dynamik aktueller elektrischer Antriebe beispielsweise eine kurzzeitige Überschreitung der zulässigen Maximalbeschleunigung +/-$\boldsymbol{\hat{a}}$ um bis zu 100%. Ein Vorgehen zum Einbremsen in einen Zielzustand nach dem im vorangehenden beschriebenen Verfahren bedeutet somit einen Verzicht auf Dynamik und Geschwindigkeit. Dies erscheint auch plausibel, wenn man bedenkt, daß im Zeitkontinuierlichen der Ruck nur die Werte -1, 0 und +1 annimmt, während er im Zeitdiskreten einen annähernd linearen, treppenförmigen Verlauf aufweist.

Es wird deshalb zunächst bei der Berechnung der für den zeitkontinuierlichen Bremsvorgang benötigten Gesamtzeit $T_{Brems\_kont} = t_7 - t^*$ die Restriktion, die Maximalbeschleunigung $\hat{a}$ und/oder den maximal zulässigen Ruck $\hat{r}$ vom Betrag her nicht zu überschreiten, fallengelassen, so daß man generell einen gemäß FIG 9 bei Betrachtung der Beschleunigung gestrichelt eingezeichneten Verlauf für die Beschleunigung a erhält. Die berechnete Zeitspanne wird dann nach oben aufgerundet, um ähnlich wie beim vorher beschriebenen Anfahren der programmierten Sollgeschwindigkeit ein ganzzahliges Vielfaches der Abtastperiode T zu erhalten. Dies ist bei der folgenden Berechnungsvorschrift berücksichtigt:

$$T_{Brems\_diskret} = ceil\,(\frac{t_7-t^*}{T})\cdot T := v\cdot T,\ v\in N. \tag{12}$$

Hiermit wird dann wiederum gemäß Berechnungsvorschrift (6) bzw. (7) die erforderliche Stellgrößenfolge $\vec{u}$ berechnet, bei der die Zielposition $s_{Ziel}$ mit der gewünschten Zielgeschwindigkeit $v_{Ziel}$ und der Beschleunigung $0$ erreicht wird:

$$[\vec{x}_{k+v}] = \begin{bmatrix} s_{Ziel} \\ v_{Ziel} \\ 0 \end{bmatrix} = \begin{bmatrix} 1 & T & T^2/2 \\ 0 & 1 & T \\ 0 & 0 & 1 \end{bmatrix}^v \cdot \begin{bmatrix} s_k \\ v_k \\ a_k \end{bmatrix} + S\cdot\vec{u}$$

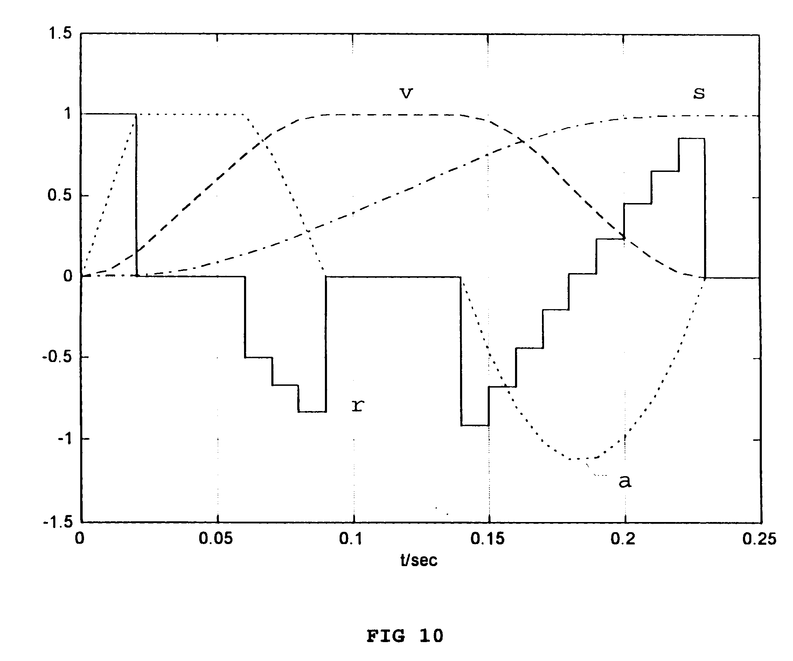

Diese Berechnungsvorschrift stellt somit eine auf das Ausführungsbeispiel zugeschnittene Ausprägung der Berechnungsvorschrift (5) dar. Bei Berücksichtigung des maximal zulässigen Rucks wird entsprechend verfahren. Falls sich dabei herausstellt, daß der Ruck r und/oder die Beschleunigung a mit dieser Steuerfolge um ein nicht vertretbares Maß überschritten würden, so beispielhaft in FIG 10 für die Beschleunigung a gezeigt, muß die Zahl der für den Einbremsvorgang zur Verfügung stehenden Tastperioden v erhöht werden. Die Zahl der für den Bremsvorgang vorgesehenen Taktperioden wird dazu so weit erhöht, bis die Beschleunigungsgrenze nicht mehr oder nur noch im Rahmen der zulässigen Toleranz der Dynamik über- bzw. bei der negativen Beschleunigungsgrenze unterschritten wird. Dadurch wird die zur Verfügung stehende Dynamik voll ausgenutzt.

In FIG 10 ist eine zeitdiskrete Bewegungsführung mit Fahren auf eine vorgegebenen Sollgeschwindigkeit $v^w = \hat{v}$ und darauffolgendem Einbremsen in einen vorgegebenen Zielzustand mit $s_{Ziel} = 47\cdot10^{-3}m$, $v_{Ziel} = 0$, $a_{Ziel} = 0$ gezeigt, wobei die Lage bzw. der Weg s anhand des strichpunktierten Verlaufs, Geschwindigkeit v anhand des gestrichelten Verlaufs, Beschleunigung a anhand des gepunkteten Verlaufs und der Ruck r anhand des durchgezogenen Verlaufs normiert auf die Maschinendaten dargestellt sind. Die Maschinendaten besitzen dieselben Werte wie weiter oben beschrieben. Die Beschleunigung a überschreitet dabei die negative Beschleunigungsgrenze erheblich.

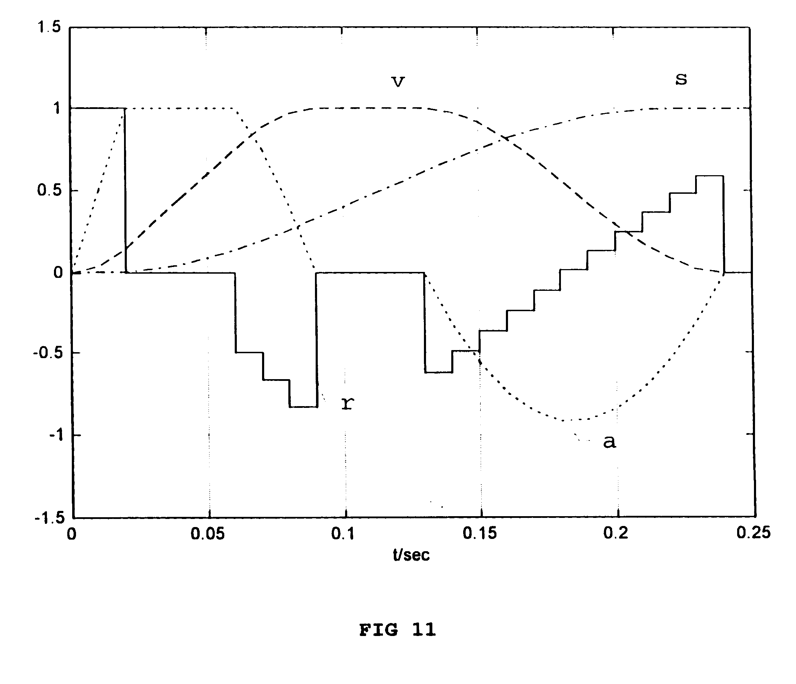

Da der Zielzeitpunkt fix vorgegeben ist, wird gleichzeitig der Bremseinsatzpunkt vorverlegt, wodurch der symmetrische Verlauf des Rucks und auch der Beschleunigung erhalten bleibt. Darüber hinaus ergibt sich eine merkliche Reduzierung der Stellenergie und damit der Maschinenbelastung. Dies wird insbesondere in FIG 11 deutlich, in der die diskrete Bewegungsführung aus FIG 10 ohne Begrenzung beim Einbremsen ins Ziel dargestellt ist. Gegenüber FIG 10 beträgt $v = 11$ anstelle 9, und der Bremsvorgang wurde bereits um einen Abtastschritt eher eingeleitet.

Desweiteren sind viele andere Begrenzungsstrategien denkbar. Zum Beispiel können die Phasen 1 und 2 aus dem zeitkontinuierlich berechneten Bremsvorgang im Zeitdiskreten approximiert werden und die Berechnung der diskreten Steuerfolge erst ab dem Zeitpunkt $t_5$ aufsetzen. Auch hier erreicht man exakt den Ziel zustand, und zwar zugunsten eines geringeren Rechenaufwands, allerdings auf Kosten der benötigten Stellenergie. Welche Strategie jeweils für die aktuelle Anwendung die günstigste ist, ist fallweise zu entscheiden.

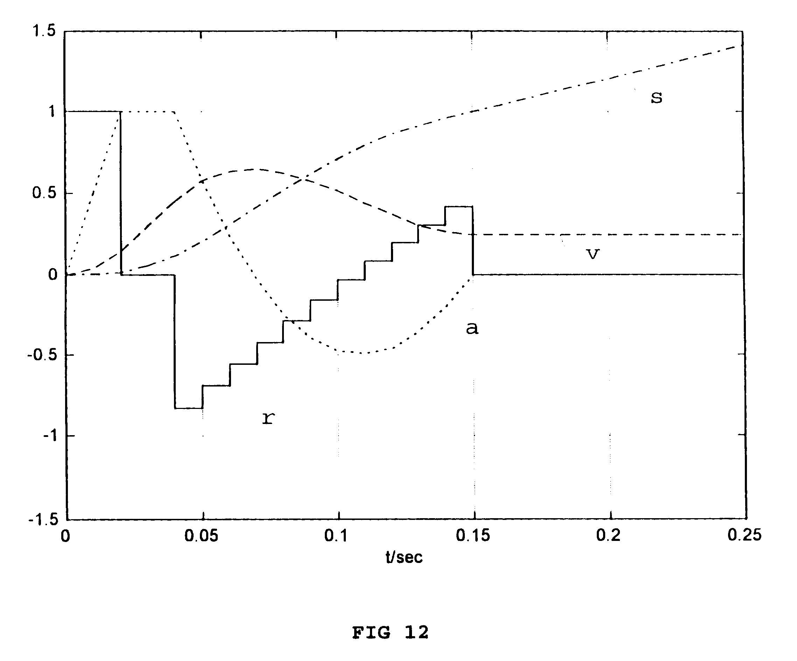

FIG 12 zeigt ein Beispiel einer diskreten Bewegungsführung, bei der die vorgegebene Sollgeschwindigkeit $v^w = \hat{v}$ erst gar nicht erreicht wird, weil die Satzlänge zu kurz ist. Der Abbremszeitpunkt $t^*$ in den Ziel zustand fällt hier also noch in die Beschleunigungsphase auf die vorgegebene Sollgeschwindigkeit $v^w = \hat{v}$ hinein. Da ferner in dem Beispiel eine Satzendgeschwindigkeit ungleich Null vorgegeben ist, nimmt der Weg bei Erreichen des Satzendes, zu erkennen am normierten Weg mit dem Wert 1, linear zu. Die zugrundegelegten Werte betragen für den Zielzustand $s_{Ziel} = 20\cdot10^{-3}m$, $v_{Ziel} = 0.25\cdot\hat{v}$, $a_{Ziel} = 0$.

Eine Vorrichtung zur Durchführung des im vorangehenden beschriebenen Verfahrens, insbesondere zur Durchführung der im einzelnen dargestellten Berechnungsvorschriften (1) bis (12), besitzt Mittel zum Integrieren der Stellgröße u bzw. $x_n$ nach beliebiger Ordnung n zur Ermittlung der einzelnen Parameter zur Bewegungsführung bis zum

Weg s bzw. $x_1$. Ist die Stellgröße u bzw. $x_n$ der Ruck r bzw. $x_4$ und wurde die Bahngeschwindigkeit v bzw. $x_2$ zur Ableitung der Stellgröße u bzw. $x_n$ zugrunde gelegt, so sind n=m+1=3 Integrierstufen zur Ermittlung von Beschleunigung a bzw. $x_3$, Bahngeschwindigkeit v bzw. $x_2$ und schließlich dem Weg s bzw. $x_1$ vorgesehen, so dargestellt in FIG 4.

Dies kann mit Hilfe eines oder mehrerer Integrierer oder Speicher geschehen oder aber durch einen entsprechenden Algorithmus mittels eines Mikroprozessors durchgeführt werden. Desweiteren sind Mittel zur Lösung des zeitdiskreten Systemmatrizengleichungssystems und damit zur exakten Berechnung der Steuerfolge $\vec{u}$ vorhanden. Bevorzugterweise wird dies durch ein Mikroprozessorsystem mit geeigneter Programmierung durchgeführt, da der erforderliche Rechenaufwand je nach Art der Bewegungsführung und verwendeter Stellgröße u stark zunimmt. Mögliche Lösungsstrategien dafür sind beispielsweise der Gauß-Jordan-Algorithmus oder Iterationsverfahren wie Newtonsches-Verfahren, Bernoulli-Verfahren oder das Sekanten-Verfahren (Regula falsi). Darüber hinaus sind selbstverständlich auch andere moderne Implementierungen von Lösungsstrategien der numerischen Verarbeitung digitaler Signale anwendbar. Ein zusätzlicher Vorteil des Einsatzes eines Mikroprozessorsystemes liegt darin, daß durch dieses zugleich auch die Integration der Stellgröße u bzw. $x_n$ durchgeführt werden kann. Aufgrund der Berechnung im Zeitdiskreten ist keine zusätzliche Integration im mathematischen Sinn erforderlich, da die Werte im Rahmen der im vorangehenden dargestellten Berechnungsvorschriften bereits bestimmt werden und somit verfügbar sind. Zusätzlich kommen zur taktsynchronen Beeinflussung der Stellgröße u bzw. $x_n$ Mittel zum Einsatz, welche die Stellgröße u bzw. $x_n$ entsprechend den berechneten Werten der Steuerfolge $\vec{u}$ ansteuern. Dies kann insbesondere ein Sample&Hold-Glied sein, so wie es in den vorangehenden Ausführungen bereits dargestellt wurde und in den FIG 2 und 4 gezeigt ist.

Ein Einsatz des Verfahrens sowie der Vorrichtung gemäß der vorliegenden Erfindung empfiehlt sich beispielsweise zur numerischen Steuerung von Werkzeugmaschinen und Robotern. Darüber hinaus ist ein Einsatz jedoch auch in beliebigen anderen Sachgebieten denkbar, bei denen eine Bewegungsführung, die insbesondere exakt und taktsynchron erfolgen soll, durchgeführt werden kann oder muß.

Die vorangehende Beschreibung bevorzugter Ausführungsformen der Vorrichtung nach der Erfindung sind zum Zwecke der Veranschaulichung angegeben. Diese sind nicht erschöpfend. Auch ist eine Vorrichtung gemäß der Erfindung nicht auf die genaue angegebene Form beschränkt, sondern es sind zahlreiche Modifikationen und Änderungen im Rahmen der vorstehend angegebenen technischen Lehre möglich. Eine bevorzugte Ausführungsform wurde gewählt und beschrieben, um die prinzipiellen Details der Erfindung und praktische Anwendungen zu verdeutlichen, um den Fachmann in die Lage zu versetzen, die Erfindung zu realisieren. Eine Vielzahl bevorzugter Ausführungsformen sowie weitere Modifikationen kommen bei speziellen Anwendungsgebieten in Betracht.

**Patentansprüche**

1.  Verfahren zur taktsynchronen Bewegungsführung in zeitdiskreten Abtastsystemen, insbesondere zur Anwendung bei numerischen Steuerungen für Werkzeugmaschinen und Roboter, mit folgenden Verfahrensschritten:

    1.1 als Stellgröße (u) dient die Ableitung beliebiger Ordnung m von der Bahngeschwindigkeit (v bzw. $x_2$) oder beliebiger Ordnung m+1 von der Lage (s bzw. $x_1$), wobei bevorzugterweise die Beschleunigung (a bzw. $x_3$) oder der Ruck (r bzw. $x_4$) verwendet werden,

    1.2 es wird aus den n=m+1 zeitdiskreten Systemmatrizengleichungen des Abtastsystems bei gegebenem Anfangszustand ($\vec{x}_k$) und gewünschtem Zustandsvektor ($\vec{x}_{k+v}$) die exakte Steuerfolge ($\vec{u}$) für die Bewegungsführung bestimmt,

    1.3 die Stellgröße (u) wird entsprechend den bestimmten Werten der Steuerfolge ($\vec{u}$) im Zeitraster (**k\*T**) des Abtastsystemes, bei numerischen Steuerungen für Werkzeugmaschinen und Roboter insbesondere im Interpolationstakt, geändert.

2.  Verfahren nach Anspruch 1, wobei die Ordnung n des Systemmatrizengleichungssystemes kleiner als die Anzahl der Abtastintervalle *(v)* zum Verfahren vom Anfangszustand ($\hat{x}_k$) in den gewünschten Zustand ($\hat{x}_{k+v}$) ist, mit folgendem weiteren Verfahrensschritt:

    2.1 die Zahl (**v-n**) der dadurch bedingten zusätzlichen Freiheitsgrade wird zum Erfüllen von Nebenkriterien verwendet, insbesondere zur Schonung der eingesetzten Mechanik durch Minimierung der mittleren Stellgrößenenergie.

3.  Verfahren nach Anspruch 1 oder 2, wobei die Steuerfolge ($\vec{u}$) für ein Verfahren auf eine vorgegebene Sollgeschwindigkeit mit folgenden Verfahrensschritten bestimmt wird:

    3.1 es wird solange mit maximal zulässigem Ruck ($\vec{r}$) die Beschleunigung (a) aufgebaut, wie die maximal zulässige Beschleunigung ($\hat{a}$) in der folgenden Tastperiode nicht überschritten zu werden droht, und der Ruck (r) dann soweit reduziert, daß die maximal zulässige Beschleunigung (**â**) exakt zum folgenden Tastzeitpunkt erreicht wird,

3.2 mit Erreichen der maximal zulässigen Beschleunigung (**â**) wird mit dieser in Richtung der Sollgeschwindigkeit ($v_{soll}$) beschleunigt,

3.3 dabei wird ständig überprüft, ob unter Beibehaltung der aktuellen Stellgröße (u) im Rahmen eines look ahead bei dem folgenden Tastzeitpunkt oder auch in einem Intervall von folgenden Tastzeitpunkten unter Berücksichtigung gegebener Beschleunigungs- und Ruckmöglichkeiten in den verbleibenden Tastperioden die erreichte Beschleunigung auf Null abgebaut werden kann,

3.4 ist dies für mindestens einen der vorausschauend untersuchten Tastzeitpunkte nicht mehr der Fall, so wird zum dem frühesten davon vorangehenden Tastzeitpunkt mit möglichst negativem Ruck (r), wo möglich mit maximal zulässigem negativen Ruck (-$\hat{r}$), die Beschleunigung (a) so abgebaut, daß die Sollgeschwindigkeit ($v_{soll}$) zum vorgegebenen Zeitpunkt ohne Überschwingungen erreicht wird.

4. Verfahren nach Anspruch 1 oder 2, wobei die Steuerfolge ($\vec{u}$) für ein Einbremsen in einen vorgegebenen Zielzustand mit folgenden Verfahrensschritten bestimmt wird:

4.1 eine eventuell noch vorhandene positive Beschleunigung (a*) wird mit möglichst negativem Ruck (r), wo möglich mit maximal zulässigem negativen Ruck (-$\hat{r}$), auf Null abgebaut,

4.2 es wird ebenfalls mit möglichst negativem Ruck (r), wo möglich mit maximal zulässigem negativen Ruck (-$\hat{r}$), die für das Einbremsen erforderliche negative Beschleunigung (a) aufgebaut,

4.3 wird dabei die maximal zulässige negative Beschleunigung (-**â**) erreicht, so wird mit dieser weiter mit einem Ruck (r) von Null abgebremst,

4.4 dabei wird ständig überprüft, ob unter Beibehaltung der aktuellen Stellgröße (u) im Rahmen eines look ahead bei dem folgenden Tastzeitpunkt oder auch in einem Intervall von folgenden Tastzeitpunkten unter Berücksichtigung gegebener Beschleunigungs- und Ruckmöglichkeiten in den verbleibenden Tastperioden der verbleibende Satzrestweg kürzer als der erforderliche Bremsweg wird,

4.5 ist dies für mindestens einen der vorausschauend untersuchten Tastzeitpunkte der Fall, so wird zum dem frühesten davon vorangehenden Tastzeitpunkt mit möglichst positivem Ruck (r), wo möglich mit maximal zulässigem positiven Ruck (+$\hat{r}$), die negative Beschleunigung (a) abgebaut und der Zielzustand ($s_{soll}$) erreicht.

5. Verfahren nach Anspruch 1 oder 2, wobei die Steuerfolge ($\vec{u}$) für ein Einbremsen in einen vorgegebenen Zielzustand mit folgenden Verfahrensschritten bestimmt wird:

5.1 eine eventuell noch vorhandene positive Beschleunigung (a*) wird mit möglichst negativem Ruck (r), wo möglich mit maximal zulässigem negativen Ruck (-$\hat{r}$), auf Null abgebaut,

5.2 es wird ebenfalls mit möglichst negativem Ruck (r), wo möglich mit maximal zulässigem negativen Ruck (-$\hat{r}$), die für das Einbremsen erforderliche negative Beschleunigung (-a) aufgebaut,

5.3 dabei wird ständig überprüft, ob unter Beibehaltung der aktuellen Stellgröße (u) im Rahmen eines look ahead bei dem folgenden Tastzeitpunkt oder auch in einem Intervall von folgenden Tastzeitpunkten unter Berücksichtigung gegebener Beschleunigungs- und Ruckmöglichkeiten in den verbleibenden Tastperioden der verbleibende Satzrestweg kürzer als der erforderliche Bremsweg wird,

5.4 ist dies für mindestens einen der vorausschauend untersuchten Tastzeitpunkte der Fall, so wird zum dem frühesten davon vorangehenden Tastzeitpunkt mit möglichst negativem Ruck (r) die Beschleunigung (a) abgebaut,

5.5 wird dabei die maximal zulässige Beschleunigung (**+â,-â**) und/oder der maximal zulässige Ruck (+$\hat{r}$,-$\hat{r}$) überschritten, so wird die Zahl der Taktperioden (v) für den Einbremsvorgang so erhöht, daß die zulässige Beschleunigungsgrenze (**+â,-â**) und/oder Ruckgrenze (+$\hat{r}$,-$\hat{r}$) nicht oder nur im Rahmen der zulässigen Toleranz unterschritten wird, und der Bremseinsatzpunkt um soviele Tastzeitpunkte vorverlegt, daß der Zielzustand ($s_{soll}$) mit einer Beschleunigung (a) und einem Ruck (r) von Null erreicht wird.

6. Verfahren nach Anspruch 4 oder 5 mit folgenden alternativen Verfahrensschritten:

6.1 das Abbauen einer evtuell noch vorhandenen positiven Beschleunigung (a) mit möglichst negativem Ruck (r) auf Null erfolgt durch Approximation im Zeitdiskreten aus dem kontinuierlich bestimmten Bremsvorgang,

6.2 das Aufbauen der für das Einbremsen erforderlichen negativen Beschleunigung (-a) mit möglichst negativem Ruck (r) erfolgt ebenfalls durch Approximation im Zeitdiskreten aus dem kontinuierlich bestimmten Bremsvorgang.

**7.** Vorrichtung zur taktsynchronen Bewegungsführung in zeitdiskreten Abtastsystemen, insbesondere zur Anwendung bei numerischen Steuerungen für Werkzeugmaschinen und Roboter, mit folgenden Elementen:

7.1 es sind Mittel, insbesondere ein Mikroprozessorsystem, zur Ableitung einer Stellgröße (u) nach beliebiger Ordnung m von der Bahngeschwindigkeit (v bzw. $x_2$) oder beliebiger Ordnung m+1 von der Lage (s bzw. $x_1$) sowie zur Bestimmung einer exakten Steuerfolge ($\vec{u}$) aus einem zeitdiskreten **n=m+1** Systemmatrizengleichungssystem des Abtastsystems bei gegebenem Anfangszustand ($\vec{x}_k$) und gewünschtem Zustandsvektor ($\vec{x}_{k+v}$) für die Bewegungsführung vorgesehen,

7.2 es sind Mittel zur taktsynchronen (k*T) Beeinflussung der Stellgröße (u) entsprechend den bestimmten Werten der Steuerfolge ($\vec{u}$) vorgesehen,

7.3 es sind Mittel zum Integrieren der Stellgröße (u bzw. $x_n$) nach beliebiger Ordnung n und damit zur Bestimmung der Bahngeschwindigkeit (v bzw. $x_2$) und der Bahn (s bzw. $x_1$) aus der Stellgröße (u bzw. $x_n$) vorgesehen.

## Claims

**1.** A process for clock-synchronised motion control in discrete-time sampling systems, in particular for use in numerical control systems for machine tools and robots comprising the following process steps:

1.1 the derivative of any order m of the path velocity (v or $x_2$) or of any order m+1 of the position (s or $x_1$) serves as manipulated variable (u), the acceleration (a or $x_3$) or the jerk (r or $x_4$) preferably being used;

1.2 the exact control sequence ($\vec{u}$) for the motion control is defined from the n=m+1 discrete-time system matrix equations of the sampling system with a given starting state ($\vec{x}_k$) and a desired state vector ($\vec{x}_{k+v}$);

1.3 the manipulated variable (u) is changed in accordance with the specified values of the control sequence ($\vec{u}$) in the time reference (k*T) of the sampling system, and in the case of numerical control systems for machine tools and robots in particular in the interpolation clock cycle.

**2.** A process according to Claim 1 wherein the order n of the system matrix equation system is smaller than the number of sampling intervals (v) for travel from the starting state ($\vec{x}_k$) into the desired state ($\vec{x}_{k+v}$), comprising the following further process step:

2.1 the number (v-n) of the resultant additional degrees of freedom is used to fulfil secondary criteria, in particular to protect the mechanical system used by minimising the average manipulated variable energy.

**3.** A process according to Claim 1 or 2, wherein the control sequence ($\vec{u}$) is defined for approaching a predetermined setpoint velocity, comprising the following process steps:

3.1 the acceleration (a) is built up with the maximum permissible jerk ($\hat{r}$) for such time as the maximum permissible acceleration ($\hat{a}$) does not seem likely to be overshot in the following sampling period, and the jerk ($\hat{r}$) is then reduced to such an extent that the maximum permissible acceleration ($\hat{a}$) is attained exactly at the following sampling instant;

3.2 upon the attainment of the maximum permissible acceleration ($\hat{a}$), acceleration takes place at this level in the direction of the setpoint velocity ($v_{soll}$) ;

3.3 it is constantly checked whether, with retention of the current manipulated variable (u), in the framework of a look-ahead, the attained acceleration can be reduced to zero at the following sampling instant or also in an interval of following sampling instants taking into account given acceleration- and jerk possibilities in the remaining sampling periods;

3.4 if this is not the case for at least one of the sampling instants investigated by looking ahead, at the sampling instant preceding the earliest of said investigated sampling instants the acceleration (a) is reduced with as negative as possible a jerk (r), where possible with the maximum permissible negative jerk ($-\hat{r}$), in such manner that the setpoint velocity ($v_{soll}$) is attained at the predetermined time with no overshooting.

**4.** A process according to Claim 1 or 2, wherein the control sequence ($\vec{u}$) is defined for deceleration into a predetermined target state, comprising the following process steps:

4.1 a positive acceleration (a*) possibly still in existence is reduced to zero with as negative as possible a jerk (r), where possible with the maximum permissible negative jerk ($-\hat{r}$);

4.2 the negative acceleration (a) required for the deceleration is likewise built up with as negative as possible a jerk (r), where possible with the maximum permissible negative jerk ($-\hat{r}$);

4.3 when the maximum permissible negative acceleration ($-\hat{a}$) is attained, deceleration continues at this level with a jerk (r) of zero;

4.4 it is constantly checked whether, with retention of the current manipulated variable (u), in the framework of a look-ahead, the remaining block length becomes shorter than the required deceleration distance at the following sampling instant or also in an interval of following sampling instants taking into account given acceleration- and jerk possibilities in the remaining sampling periods;

4.5 if this is the case for at least one of the sampling instants investigated by looking ahead, at the sampling instant preceding the earliest of said investigated sampling instants the negative acceleration (a) is reduced with as positive as possible a jerk (r), where possible with the maximum permissible positive jerk ($+\hat{r}$) and the target state ($s_{soll}$) is reached.

5. A process according to Claim 1 or 2, wherein the control sequence ($\vec{u}$) is defined for deceleration into a predetermined target state, comprising the following process steps:

5.1 a positive acceleration (a*) possibly still in existence is reduced to zero with as negative as possible a jerk (r), where possible with the maximum permissible negative jerk ($-\hat{r}$);

5.2 the negative acceleration (-a) required for the deceleration is likewise built up with as negative as possible a jerk (r), where possible with the maximum permissible negative jerk ($-\hat{r}$);

5.3 it is constantly checked whether, with retention of the current manipulated variable (u), in the framework of a look-ahead, the remaining block length becomes shorter than the required deceleration distance at the following sampling instant or also in an interval of following sampling instants taking into account given acceleration- and jerk possibilities in the remaining sampling periods;

5.4 if this is the case for at least one of the sampling instants investigated by looking ahead, at the sampling instant preceding the earliest of said investigated sampling instants the acceleration (a) is reduced with as negative as possible a jerk (r) ;

5.5 if the maximum permissible acceleration (+â, -â) and/or the maximum permissible jerk ($+\hat{r}$, $-\hat{r}$) is overshot, the number of clock periods (v) for the deceleration process is increased in such manner that the permissible acceleration limit (+â, -â) and/or jerk limit ($+\hat{r}$, $-\hat{r}$) is not undershot or is undershot only within the permissible tolerance, and the deceleration starting point is advanced by a number of sampling instants such that the target state ($s_{soll}$) is attained with an acceleration (a) and a jerk (r) of zero.

6. A process according to Claim 4 or 5 comprising the following alternative process steps:

6.1 the reduction to zero of a positive acceleration (a) possibly still in existence with as negative as possible a jerk (r) takes place by approximation in discrete time from the continuously defined deceleration process;

6.2 the build-up of the negative acceleration (-a) required for the deceleration with as negative as possible a jerk (r) likewise takes place by approximation in discrete time from the continuously defined deceleration process.

7. A device for clock-synchronised motion control in discrete-time sampling systems, in particular for use in numerical control systems for machine tools and robots, comprising the following elements;

7.1 means are provided, in particular a microprocessor system, for deriving a manipulated variable (u) of any order m from the path velocity (v or $x_2$) or of any order m+1 from the position (s or $x_1$) and for defining an exact control sequence ($\vec{u}$) from a discrete-time n=m+1 system matrix equation system of the sampling system with a given starting state ($\vec{x}_k$)) and a desired state vector ($\vec{x}_{K+v}$) for the motion control;

7.2 means are provided for clock-synchronised (k*T) influencing of the manipulated variable (u) in accordance with the defined values of the control sequence ($\vec{u}$) ;

7.3 means are provided for integrating the manipulated variable (u or $x_n$) of any order n and thus for defining the path velocity (v or $x_2$) and the path (s or $x_1$) from the manipulated variable (u or $x_n$).

## Revendications

1. Procédé pour la commande de déplacement à synchronisation par impulsions d'horloge dans des systèmes d'échantillonnage temporels discrets, notamment en vue d'une utilisation pour des commandes numériques de machines-outils et de robots, ayant les étapes opératoires suivantes :

   1.1 comme grandeur réglante (u), on utilise la dérivée d'ordre quelconque m de la vitesse (v ou $x_2$) sur la trajectoire ou d'ordre quelconque m + 1 de la position (s ou $x_1$), l'accélération (a ou $x_3$) ou la suraccélération (r ou $x_4$) étant utilisées de préférence,
   1.2 on détermine à partir des n = m + 1 équations matricielles temporelles discrètes du système d'échantillonnage pour un état initial donné ($\vec{x}_k$) et pour un vecteur d'état souhaité ($\vec{x}_{k+v}$) la séquence de commande exacte ($\vec{u}$) pour la commande de déplacement,
   1.3 on modifie la grandeur réglante (u) en fonction des valeurs déterminées de la séquence de commande ($\vec{u}$) dans la trame temporelle (k*T) du système d'échantillonnage, c'est-à-dire pour des commandes numériques de machines-outils et de robots notamment dans l'impulsion d'interpolation.

2. Procédé selon la revendication 1, l'ordre n du système d'équations matricielles de système étant plus petit que le nombre des intervalles d'échantillonnage (v) pour passer de l'état initial ($\vec{x}_k$) à l'état souhaité ($\vec{x}_{k+v}$), avec l'autre étape opératoire suivante :
   2.1 on utilise le nombre (v- n) des degrés de liberté supplémentaires ainsi obtenus pour satisfaire des critères secondaires, notamment pour protéger la mécanique utilisée en minimisant l'énergie moyenne de grandeur réglante.

3. Procédé selon la revendication 1 ou 2, la séquence de commande ($\vec{u}$) pour une approche de la vitesse de consigne prédéterminée étant déterminée avec les étapes opératoires suivantes :

   3.1 on établit l'accélération (a) avec la suraccélération maximale autorisée ($\hat{r}$) tant que l'accélération maximale autorisée (â) ne menace pas d'être dépassée dans la période d'échantillonnage suivante et on réduit alors la suraccélération (r) jusqu'à ce que l'accélération maximale autorisée (â) soit atteinte exactement à l'instant d'échantillonnage suivant,
   3.2 une fois l'accélération maximale autorisée (â) atteinte, on accélère avec celle-ci en direction de la vitesse de consigne ($v_{soll}$),
   3.3 ce faisant, on contrôle constamment si, en conservant la grandeur réglante actuelle (u), dans le cadre d'une prospection à l'instant d'échantillonnage suivant ou dans un intervalle d'instants d'échantillonnage suivants en tenant compte de possibilités données d'accélération et de suraccélération, on peut réduire à zéro l'accélération dans les périodes d'échantillonnage restantes,
   3.4 si ce n'est plus le cas pour au moins l'un des instants d'échantillonnage examinés au cours de la prospection, on réduit l'accélération (a) dès le premier instant d'échantillonnage arrivant ensuite et avec la suraccélération (r) la plus négative possible, si possible avec la suraccélération négative maximale autorisée (-$\hat{r}$), de manière à atteindre sans suroscillation la vitesse de consigne ($v_{soll}$) à l'instant prédéterminé.

4. Procédé selon la revendication 1 ou 2, la séquence de commande ($\vec{u}$) pour un freinage dans un état visé prédéterminé étant déterminée avec les étapes opératoires suivantes :

   4.1 on réduit à zéro une accélération positive éventuellement encore présente (a*) avec la suraccélération (r) la plus négative possible, si possible avec la suraccélération négative maximale autorisée (-$\hat{r}$),
   4.2 on établit l'accélération (a) négative nécessaire au freinage également avec la suraccélération (r) la plus négative possible, si possible avec la suraccélération négative maximale autorisée (- $\hat{r}$),
   4.3 ce faisant, si on atteint l'accélération négative maximale autorisée (- â), on continue à freiner avec celle-ci avec une suraccélération (r) nulle,

4.4 ce faisant, on contrôle constamment si, en conservant la grandeur réglante actuelle (u), dans le cadre d'une prospection à l'instant d'échantillonnage suivant ou dans un intervalle d'instants d'échantillonnage suivants en tenant compte de possibilités données d'accélération et de suraccélération, le parcours résiduel de séquence restant dans les périodes d'échantillonnage restantes est plus court que le parcours de freinage nécessaire,

4.5 si c'est le cas pour au moins l'un des instants d'échantillonnage examinés au cours de la prospection, on réduit l'accélération (a) négative dès le premier instant d'échantillonnage arrivant ensuite et avec la suraccélération (r) la plus positive possible, si possible avec la suraccélération positive maximale autorisée $(+ \hat{r})$, et on atteint l'état visé ($s_{soll}$).

5. Procédé selon la revendication 1 ou 2, la séquence de commande ($\vec{u}$) pour un freinage dans un état visé prédéterminé étant déterminée avec les étapes opératoires suivantes :

5.1 on réduit à zéro une accélération positive éventuellement encore présente (a*) avec la suraccélération (r) la plus négative possible, si possible avec la suraccélération négative maximale autorisée $(- \hat{r})$,

5.2 on établit l'accélération négative (- a) nécessaire au freinage également avec la suraccélération (r) la plus négative possible, si possible avec la suraccélération négative maximale autorisée $(- \hat{r})$,

5.3 ce faisant, on contrôle constamment si, en conservant la grandeur réglante actuelle (u), dans le cadre d'une prospection à l'instant d'échantillonnage suivant ou dans un intervalle d'instants d'échantillonnage suivants en tenant compte de possibilités données d'accélération et de suraccélération, le parcours résiduel de séquence restant dans les périodes d'échantillonnage restantes est plus court que le parcours de freinage nécessaire,

5.4 si c'est le cas pour au moins l'un des instants d'échantillonnage examinés au cours de la prospection, on réduit l'accélération (a) dès le premier instant d'échantillonnage arrivant ensuite et avec la suraccélération (r) la plus négative possible,

5.5 ce faisant, si l'accélération maximale autorisée $(+ \hat{a}, - \hat{a})$ et/ou la suraccélération maximale autorisée $(+ \hat{r}, - \hat{r})$ sont dépassées, on augmente le nombre des périodes d'échantillonnage (v) pour l'opération de freinage de telle sorte que la limite d'accélération autorisée $(+ \hat{a}, - \hat{a})$ et/ou la limite de suraccélération autorisée $(+ \hat{r}, -\hat{r})$ ne sont pas dépassées ou seulement dans les limites de la tolérance autorisée, et on avance le point de déclenchement du freinage d'autant d'instants d'échantillonnage qu'il est nécessaire pour que l'état visé ($s_{soll}$) soit atteint avec une accélération (a) et une suraccélération (r) nulles.

6. Procédé selon la revendication 4 ou 5 avec les étapes opératoires suivantes :

6.1 la réduction à zéro d'une accélération (a) positive éventuellement encore présente avec la suraccélération (r) la plus négative possible s'effectue au moyen d'une approximation en temps discret à partir de l'opération de freinage déterminée en continu,

6.2 l'établissement de l'accélération négative (- a) nécessaire au freinage avec la suraccélération (r) la plus négative possible s'effectue également au moyen d'une approximation en temps discret à partir de l'opération de freinage déterminée en continu.

7. Dispositif pour la commande de déplacement à synchronisation par impulsions d'horloge dans des systèmes d'échantillonnage temporels discrets, notamment en vue d'une utilisation pour des commandes numériques de machines-outils et de robots, avec les éléments suivants :

7.1 il est prévu des moyens, notamment un système à microprocesseur, destinés à calculer la dérivée d'une grandeur réglante (u) selon un ordre quelconque m de la vitesse (v ou $x_2$) sur la trajectoire ou selon un ordre quelconque m + 1 de la position (s ou $x_1$) ainsi qu'à déterminer une séquence de commande exacte ($\vec{u}$) pour la commande de déplacement à partir d'un système de n = m + 1 équations matricielles temporelles discrètes du système d'échantillonnage pour un état initial donné ($\vec{x}_k$) et pour un vecteur d'état souhaité ($\vec{x}_{k+v}$) ,

7.2 il est prévu des moyens destinés à influencer la grandeur réglante (u), de manière synchrone (k * T) aux impulsions, en fonction des valeurs déterminées de la séquence de commande ($\vec{u}$)

7.3 il est prévu des moyens destinés à calculer l'intégrale de la grandeur réglante (u ou xn) selon un ordre quelconque n et donc à déterminer la vitesse (v ou $x_2$) sur la trajectoire et la trajectoire (s ou $x_1$) à partir de la grandeur réglante (u ou $x_n$).

FIG 1

FIG 2

$u^{\cdot}(t)$

$\bar{u}(t)$

$t / T$

$t / T$

0 1 2 3 4 5 6

0 1 2 3 4 5 6

FIG 3

FIG 4

EP 0 768 587 B1

FIG 5

FIG 6

EP 0 768 587 B1

FIG 7

FIG 8

FIG 9

EP 0 768 587 B1

FIG 10

FIG 11

FIG 12